# EUROPEAN PATENT APPLICATION

(11) **EP 0 755 774 A2**
(43) Date of publication of application: **29.01.1997**
(21) Application number: 96111349.5
(22) Date of filing: 15.07.1996
(51) Int. Cl.: B29C 69/02, B29C 65/02, B29C 43/00

(54) **Method and apparatus for producing structural parts made of plastics material**

(30) Priority: 28.07.1995 IT TO950636
(71) Applicant: FIAT AUTO S.p.A., 10135 Torino (IT)
(72) Inventor: Da Re', Mario (IT), 10128 Torino (IT)
(74) Representative: Rambelli, Paolo

(57) **Abstract**

In a method and a vertical press for producing structural parts made of plastics material and formed by at least two moulded elements connected to one another permanently along respective mating surfaces, the permanent connection of the two elements is achieved by the closing together of the respective moulding half-dies (1, 2) with the interposition of a thermosetting adhesive joint on the mating surfaces of at least one of the two elements and the thermal setting of the adhesive joint, with the half dies closed, by the application of a high-frequency field extending between the edges of the two half-dies (1, 2) which support the mating surfaces of the two elements, or by the thermal fusion of the plastics material constituting at least one of the two elements, with the half-dies closed, by the generation of ultrasound or by means of heat generated by heating means along the edges of the half-dies (1, 2).

## Description

The present invention relates to a method and to apparatus for producing structural parts made of plastics material and formed by at least two moulded elements connected to one another permanently along respective mating surfaces, in which the permanent connection of the two elements is achieved by the closing together of the respective moulding half-dies to bring the mating surfaces into contact with one another and the welding of these surfaces.

A method of the type mentioned above is described in EP-A-0 336 906. The method is carried out with the use of a vertical press having first and second half-dies and a movable punch interposed between the half-dies and having upper and lower moulding surfaces which cooperate with the first and second half-dies to define the cavities for the moulding of the two elements forming the structural part; the punch can be moved outside the two half-dies to allow at least one of the two half-dies to travel vertically to bring the mating surfaces of the two moulded elements into contact.

The permanent welding of the two elements is achieved by the interposition of an adhesive joint on the mating surfaces of the two elements, the press being kept in the closed position for a period long enough to bring about mutual adhesion of the two elements.

The object of the present invention is to provide an improved method and apparatus, in which the final step of the welding of the two elements can be carried out more quickly, avoiding dead waiting times and at the same time improving the mechanical strength of the weld.

For this purpose, a subject of the invention is a method of the type mentioned above, characterized in that the final step of welding the two elements is carried out by means of one of the following operations:
a) the interposition of an adhesive joint on the mating surfaces of at least one of the two elements and the thermal setting of the adhesive joint, with the half-dies closed, by the application of a high-frequency field extending between the edges of the two half-dies which support the mating surfaces of the two elements,
b) the thermal fusion of the plastics material constituting at least one of the two elements, with the half-dies closed, by the generation of ultrasound along the edges of at least one of the two half-dies which support the mating surfaces of the two elements, and
c) the thermal fusion of the plastics material constituting at least one of the two elements, with the half-dies closed, by the supply of heat generated by heating means located in the edges of at least one of the two half-dies which support the mating surfaces of the two elements.

The apparatus for carrying out the method is constituted by a vertical press of the type mentioned above, characterized in that it comprises, in association with the edges of at least one of the two half-dies which support the mating surfaces of the two moulded elements, means for the permanent connection of the two elements, selected from:
a') a high-frequency generator with electrodes for generating a high-frequency field between the edges of the two half-dies,
b') ultrasound-generating means incorporated along the edges of at least one of the two half-dies which support the mating surfaces of the two elements, and
c') heating means incorporated along the edges of at least one of the two half-dies which support the mating surfaces of the two elements.

Further characteristics and advantages of the present invention will become clear in the course of the following detailed description, given purely by way of non-limiting example with reference to the appended drawings, in which:
Figures 1-5 are schematic views of the operating steps of the method, in sequence,

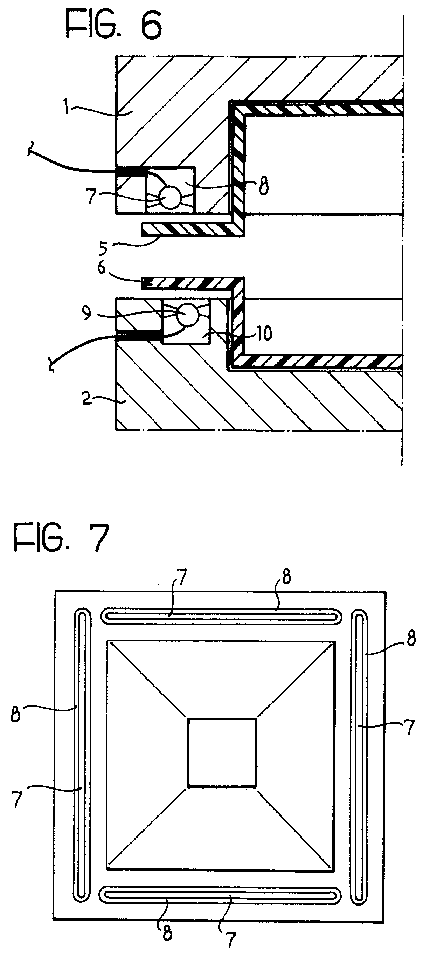

Figure 6 is a partially-sectioned view of two half-dies arranged for carrying out the method according to variant a),
Figure 7 is a plan view of a half-die of the type shown in Figure 6, arranged for carrying out the method according to variant a),

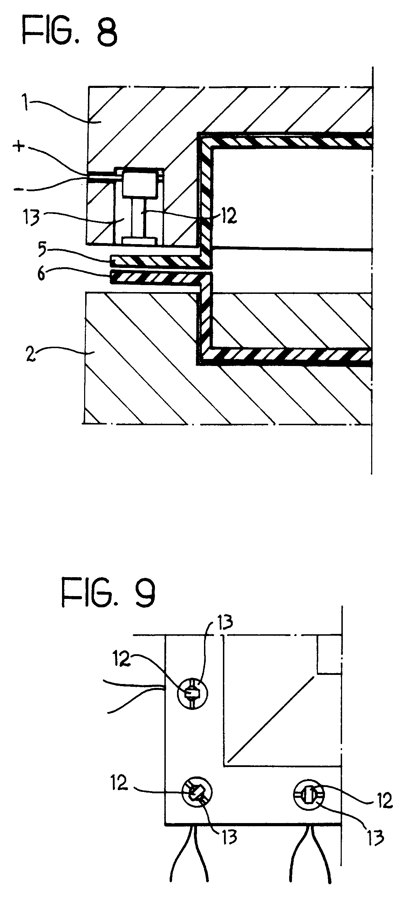

Figure 8 is a partially-sectioned view of two half-dies arranged for carrying out the method according to variant b),
Figure 9 is a plan view of a portion of a half-die of the type shown in Figure 8,

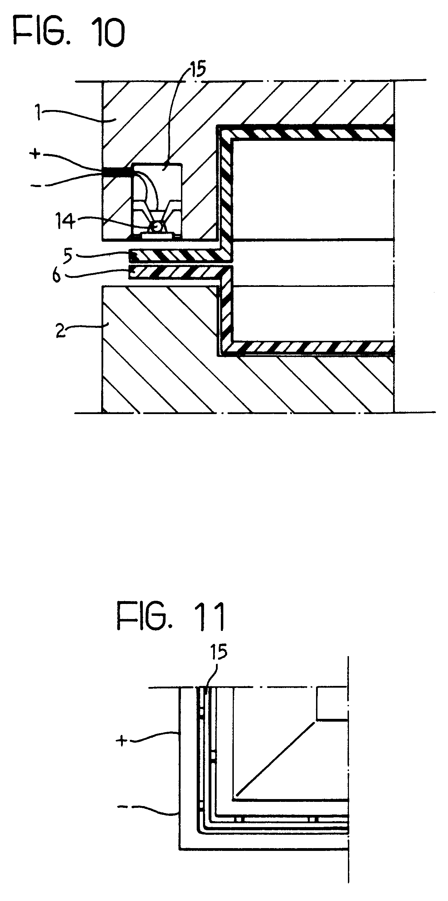

Figure 10 is a partially-sectioned view of two half-dies arranged for carrying out the method according to variant c), and
Figure 11 is a plan view of a portion of a half-die of the type shown in Figure 10.

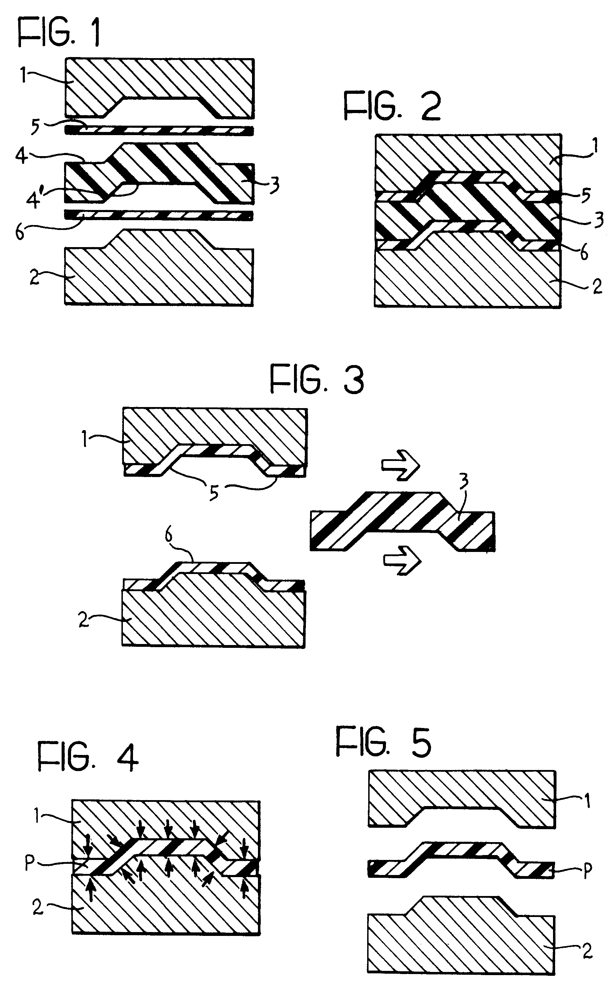

With reference initially to Figures 1-5, the method according to the invention is carried out in a vertical press comprising an upper half-die 1 and a lower half-die 2, at least one of which is movable vertically relative to the other; a movable punch 3 interposed between the two half-dies 1, 2 has an upper moulding surface 4 and a lower moulding surface 4' which cooperate with the upper and lower half-dies 1 and 2, respectively, to define cavities for the moulding of the two elements constituting the structural part. These elements are indicated schematically 5 and 6 in the non-moulded configuration in Figure 1.

The method can be carried out with the use of either thermoplastic or thermosetting plastics materials. The moulding operation may take place by injection-compression or direct compression, according to the basic material.

Taking account of the structural characteristics of the parts to be produced, GMT (Glass Mat Thermoplastics) material is preferably used as the plastics material; as thermosetting materials, the use of fibre-reinforced thermosetting polyesters such as BMC, SMC is preferred. The method is not, however, intended to be limited to the materials mentioned above.

In the second operating step (Figure 2), the two half-dies 1, 2 are closed and pressurized in order to mould the two elements 5 and 6. In the third operating step (Figure 3), the press is opened and the punch 3 is removed therefrom. During this step, the two moulded elements 5 and 6 are kept adhering to the surfaces of the respective half-dies 1, 2.

In the fourth operating step (Figure 4), the press is closed, bringing the mating surfaces of the two elements 5 and 6, supported by the respective half-dies 1, 2, into contact; in this step, the two elements are welded along the respective mating surfaces. In the final step (Figure 5), the die is opened for the removal of the desired structural part P formed by the connection of the two moulded elements 5 and 6.

If the two elements or half-shells forming the structural part are made of thermosetting plastics material or if at least one of them is made of thermosetting plastics material, the permanent fixing of the two elements is achieved by the interposition of an adhesive joint constituted by an adhesive which can be polymerized by high-frequency radiation (HF). Adhesives usable for this purpose are known in the art; for example, two-part polyurethane adhesives may be used.

The adhesive is spread on at least one of the mating surfaces of the two elements 5 and 6 forming the structural part, with the half-dies open.

According to variants a) and a'), a high-frequency generator is associated with the two half-dies 1, 2 and is formed by upper electrodes 7 (emitter electrodes) extending longitudinally in grooves 8 formed along the perimetral edges of the half-die 1 supporting the surfaces of the element 5 which mate with the element 6, and by lower electrodes 9 (receiver electrodes) extending longitudinally in corresponding grooves 10 formed along the perimetral edges of the half-die 2. The emitter electrodes are connected in parallel with one another, as are the receiver electrodes. The installed powers may vary within a wide range but, for applications within the scope of the invention, are preferably between 7 and 12 kW with a frequency of 27.2 MHz.

According to variants b) and c) of the method, the permanent connection of the two elements 5 and 6 is achieved by thermal fusion of the thermoplastics material constituting the mating surfaces of at least one of the two elements 5 and 6.

According to the method variant b) and the apparatus variant b'), the thermal fusion is achieved by means of ultrasound generated by modular generators 12 with automatic frequency tuning, disposed in recesses 13 formed along the perimetral edges of at least one of the two half-dies 1, 2. It has been found that, with the use of modular generators facing discrete areas of the mating surfaces of the two elements, it is possible to achieve complete fusion of the contact surfaces and, after cooling, firm adhesion between the two elements 5 and 6. The periods during which the two half-dies 1, 2 are closed and the ultrasound generators are operative are of the order of a few seconds; typically, frequencies of from 30 to 40 kHz may be used, preferably with powers of from 300 to 2400 watts per individual generator.

According to the method variant c) and the apparatus variant c'), the thermal fusion is achieved by heating means, typically armoured resistors 14 extending longitudinally along the perimetral edges of at least one of the two half-dies 1, 2, which edges support the mating surfaces of the two elements 5 and 6. In this case, the heating periods with the half-dies closed are of the order of from 10 to 30 seconds with installed powers of the order of about 15 kW.

The method and the apparatus described above are particularly suitable for the production of structural parts with box-like structures, which are used in the automotive field, such as, for example, the radiator support, the panel for supporting the light units, the cross-member below the rear lights, and the backrest support for the rear seat.

### Example 1

The method according to the invention was used to produce a radiator support for a motor vehicle, formed by two half-shells of thermoplastic polyester connected to one another along surfaces having a total area of 650x350 mm. Precisely, the material used was GMT marketed under the name AZMET C 2035-701 by GE Plastics. The moulding was carried out by direct compression. The characteristics of the material were as follows:
- tensile breaking strength: 100 MPa
- tensile modulus: 7000 MPa
- flexural breaking strength: 190 MPa
- flexural modulus: 8000 MPa
- Charpy test without notch: 110 kJ/m²
- constant-velocity impact test: 11 J
- specific gravity: 1.59
- glass fibre content: 35%
- shrinkage in the die: 0.3-0.4%.

Once the central punch 3 had been removed from the vertical press, the perimetral edges of the two elements were joined by fusion by the generation of ultrasound with the use of Herfurth modular generators; the upper half-die 1 included fifteen heads for generating ultrasound at 40 kHz and 1350 watts. The period during which the die was closed, in the course of which the ultrasound generators were kept operative to bring about the thermal fusion, was 3 seconds.

### Example 2

The test described above was repeated with the use of a vertical press in which electrical resistors with installed power of 15 kW were located along the perimetral edge of the upper half-die 1 with 20-second closure periods of the vertical press.

### Example 3

A radiator support was produced by the connection of two half-shells formed from different materials. The upper half-shell was made of GMT material as described in Example 1 and moulded by direct compression. The lower half-shell was made of SMC moulded by direct compression. In this case, the permanent connection was achieved with the use of a glue which can be polymerized by high-frequency radiation. A low-shrinkage, two-component SMC material filled with glass (15% by weight) was used and included the following components:
- polyester resin: 27.8% by weight
- thermoplastic additive: 9.3% by weight
- catalyst (tertiary butyl perbenzoate): 9.3% by weight
- release agent (Zn stearate): 1.5% by weight
- polyethylene powder: 2.0% by weight
- filler (calcium carbonate): 55.6% by weight
- pigment paste: 3% by weight
- thickening agent (MgO): 0.4% by weight.

The mechanical properties of the test sample of the SMC used were as follows:
- flexural strength: 130 MPa
- flexural modulus: 10 GPa
- tensile strength: 60 MPa
- tensile modulus: 12 GPa
- compressive strength: 110 MPa
- tensile elongation at break: 0.3%
- IZOD impact strength (with notch): 42 J/m of notch x 10
- Rockwell hardness: H 50.

The glue used was a two-component polyurethane adhesive called TOPFIX XPU 4952 A/B from Ceca Italiana S.p.A., having the following characteristics:

| | Base (A) | Hardener (B) |
|---|---|---|
| appearance | viscous liquid | viscous liquid |
| colour | light beige | beige |
| LVT viscosity at 23°C (46 rpm) | 50000 mPas | 40000 mPas |
| density | ≥1.67 | ≥1.83 |
| flash point | >100°C | >100°C |

| Mixture ratio | | |
|---|---|---|
| by weight | 100 | 108 |
| by volume | 100 | 1000 |

| Characteristics of the mixture | | |
|---|---|---|
| setting time | for 100 cm² at 23°C | 5 to 7 min |
| | for 100 cm² at 35°C | 3 min |
| thixotropic seam sag ≤ 4 mm. | | |

The glue was set by the application of high-frequency radiation emitted by a generator with an installed power of 7 kW formed by emitters and receivers extending longitudinally and located in the edges of the half-dies 1, 2. The glue was polymerized with vertical-press closure periods of 5 seconds.

The radiator supports produced in accordance with the examples given above had the mechanical strength characteristics required for the application.

## Claims

1. A method of producing structural parts made of plastics material and formed by at least two moulded elements connected to one another permanently along respective mating surfaces, in which the permanent connection of the two elements is achieved by the closing together of the respective moulding half-dies (1, 2) to bring the mating surfaces into contact with one another and the welding together of these surfaces, characterized in that the permanent welding step is carried out by means of one of the following operations:
a) the interposition of a thermosetting adhesive joint on the mating surfaces of at least one of the two elements and the thermal setting of the adhesive joint, with the half-dies closed, by the application of a high-frequency field extending between the edges of the two half-dies (1, 2) which support the mating surfaces of the two elements;
b) the thermal fusion of the plastics material constituting at least one of the two elements, with the half-dies closed, by the generation of ultrasound along the edges of at least one of the two half-dies (1, 2) which support the mating surfaces of the two elements; and
c) the thermal fusion of the plastics material constituting at least one of the two elements, with the half-dies closed, by the supply of heat generated by heating means located in the edges of at least one of the two half-dies (1, 2) which support the mating surfaces of the two elements.

2. A method according to Claim 1, variant a), in which at least one of the two elements is constituted by fibre-reinforced unsaturated polyester, and in which the adhesive joint is constituted by a two-component polyurethane resin.

3. A method according to Claim 1, variants b) and c), in which the material constituting the two elements is a glass-reinforced thermoplastic polyester.

4. A vertical press for producing structural parts made of plastics material and formed by at least two moulded elements (5, 6) connected to one another permanently along respective mating surfaces, comprising:
- at least one first and one second half-die (1, 2), at least one of which is movable vertically relative to the other,
- a punch (3) interposed between the two half-dies, having an upper moulding surface (4) and a lower moulding surface (4') cooperating with the first and second half-dies (1, 2), respectively, to define cavities for the moulding of the elements,
in which the punch (3) can be moved outside the two half-dies (1, 2) to allow at least one of the two half-dies (1, 2) to travel vertically to bring the mating surfaces of the two moulded elements into contact, characterized in that it comprises means for the permanent connection of the two elements with the half-dies closed, the connection means being selected from:
a') a high-frequency generator (7, 9) with emitter and receiver electrodes associated with the edges of the two half-dies (1, 2) which support the mating surfaces of the elements, for generating a high-frequency field between the edges of the two half-dies (1, 2);
b') ultrasound-generating means (12) incorporated along the edges of at least one of the two half-dies (1, 2) which support the mating surfaces of the two elements, and
c') heating means (14) incorporated along the edges of at least one of the two half-dies (1, 2) which support the mating surfaces of the two elements.

5. A vertical press according to Claim 4, variant a), in which the high-frequency generator has a power of from 7 to 12 kW with a frequency of 27 MHz.

6. A vertical press according to Claim 4, variant b), in which the ultrasound-generating means are constituted by modular devices disposed in discrete areas of the edges of at least one of the two half-dies (1, 2), the modular generators operating at frequencies of from 20 to 400 kHz with powers of from 300 to 2400 watts.
